# EUROPÄISCHE PATENTSCHRIFT

(11) **EP 0 570 625 B1**
(45) Veröffentlichungstag und Bekanntmachung des Hinweises auf die Patenterteilung: **07.08.1996**
(21) Anmeldenummer: 92121551.3
(22) Anmeldetag: 18.12.1992
(51) Int. Cl.: F16C 11/08

(54) **Schwenklager**
Swivel bearing
Palier pivotant

(30) Priorität: 20.05.1992 DE 4216559
(43) Veröffentlichungstag der Anmeldung: 24.11.1993
(73) Patentinhaber: Firma Carl Freudenberg, D-69469 Weinheim (DE)
(72) Erfinder: Gruber, Walter, W-6940 Weinheim (DE)

(56) Entgegenhaltungen:
- DE-A- 2 234 338
- DE-B- 1 297 411
- DE-B- 2 264 236
- US-A- 3 250 554
- US-A- 3 328 101
- PATENT ABSTRACTS OF JAPAN, unexamined applications, M Section, Band 13, Nr. 373, 18. August 1989 THE PATENT OFFICE JAPANESE GOVERNMENT Seite 27 M 861; & JP-A-01-126 415 (TOKAI RUBBER IND. LTD.)

## Beschreibung

Die Erfindung betrifft ein Schwenklager, umfassend einen in einem Gehäuse aufgenommenen Kugelkörper, wobei der Kugelkörper durch eine ringförmig ausgebildete Zwischenschicht aus Gummi in dem Gehäuse abgestützt ist, wobei der Kugelkörper durch einen Führungsring auf der Zwischenschicht abgesützt ist, wobei das Schwenklager durch zumindest einen am Gehäuse befestigten Faltenbalg abgedichtet ist und wobei das Gehäuse beiderseits im Bereich seiner stirnseitigen Begrenzungen radial nach innen gerichtete Anschlagpuffer zur Begrenzung von extremen Relativverlagerung in axialer Richtung aufweist.

Ein solches Schwenklager ist aus der JP-A-1 126 415 bekannt. Der Führungsring besteht aus Gummi und ist relativ beweglich zur Zwischenschicht angeordnet. Die Abdichtung des Kugelkörpers besteht ebenfalls aus Gummi, wobei der Führungsring eine selbstschmierende Oberfläche hat. Sekundäre Schmiermittel zur Verringerung der Reibung zwischen den relativ zueinander beweglichen Oberflächen sind bei dem vorbekannten Schwenklager nicht vorgesehen.

Ein weiteres Schwenklager ist aus der EP-PS 0 302 180 bekannt. Das Schwenklager ist als Gelenk für Achsstreben, Lenker oder dergleichen in Kraftfahrzeugen ausgebildet und weist einen Kugelkörper auf, der zumindest einen Gelenkzapfen umfangsseitig starr umschließt. Zwischen dem Gehäuse und dem Gelenkzapfen ist ein hülsenförmiger Gelenkkörper aus elastomerem Werkstoff unter radialer Vorspannung angeordnet. An den beiden Stirnseiten des elastomeren Gelenkkörpers befinden sich Stützringe, mit denen er in dem Gehäuse gehalten ist und die gleichzeitig eine Begrenzung der kardanischen Auslenkbewegungen bedingen. Dabei ist allerdings zu beachten, daß die Gebrauchseigenschaften des vorbekannten Schwenklagers wenig befriedigend sind. Insbesondere kardanische Winkel von mehr als 10° und eine kräftearme, kardanische Bewegung sind mit dem bekannten Schwenklager nicht zu erreichen. Durch die Ausgestaltung der Zwischenschicht aus Gummi sind außerdem die Isolationseigenschaften betriebsbedingt eingeleiteter Schwingungen wenig befriedigend.

Der Erfindung liegt die Aufgabe zugrunde, ein Schwenklager der vorbekannten Art derart weiterzuentwickeln, daß kardanische Winkel von mehr als 10° besonders kräftearm aufgenommen werden können und daß das Schwenklager verbesserte Isolationseigenschaften betriebsbedingt eingeleiteter Schwingungen aufweist sowie einfach montierbar und kostengünstig zu fertigen ist.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Zur Lösung der gestellten Aufgabe ist es vorgesehen, daß der Führungsring aus einem Hartwerkstoff besteht, daß die Anschlagpuffer durch Umformen der stirnseitigen Begrenzungen gebildet sind und daß die Anschlagpuffer einen innendurchmesser aufweisen, der größer ist als der Außendurchmesser des Kugelkörpers und kleiner ist, als der größte Außendurchmesser des Führungsrings, daß das Gehäuse im Bereich seiner stirnseitigen Begrenzungen Haltevorrichtungen aufweist, in denen der Faltenbalg aufgenommen ist und daß die Haltevorrichtungen und die Anschlagpuffer einstückig ineinander übergehend ausgebildet sind. Das Schwenklager zeigt gute Gebrauchseigenschaften während einer langen Gebrauchsdauer. Es können große kardanische Winkel kräftearm eingestellt werden und das Schwenklager weist gute Isolationseigenschaften betriebsbedingter Schwingungen auf. Das Schwenklager gelangt bevorzugt im Bereich von Radführungselementen und der Lenkung von Kraftfahrzeugen zur Anwendung. In Betrieb treten neben großen Kräften in axialer und radialer Richtung auch große Bewegungen in den Gelenkstellen auf. Das erfindungsgemäße Schwenklager erfüllt extreme Randbedingungen und kann z. B. hohe Axialkräfte von mehr als 0,5 kN, große Radialkräfte von mehr als 1 kN und sehr große kardanische Winkel von mehr als 10° kräftearm aufnehmen. Durch den Faltenbalg, der am Gehäuse befestigt ist und das Schwenklager abdichtet sind sehr gute Gebrauchseigenschaften während einer langen Gebrauchsdauer gewährleistet. Das Schwenklager ist dadurch vor äußeren Einflüssen gut geschützt.

Dadurch, daß der Führungsring, der auf der dem Kugelkörper zugewandten Seite hohllkugelförmig ausgebildet ist, eine geringere axiale Ausdehnung aufweist, als der Kugelkörper, ist eine ausgezeichnete kardanische Beweglichkeit gewährleistet.

Zur Begrenzung von Relativverlagerungen des Gehäuses in axialer Richtung zu dem Kugelkörper weist das Gehäuse beiderseits im Bereich seiner stirnseitigen Begrenzungen radial nach innen gerichtete Anschlagpuffer auf, wobei die Anschlagpuffer derart ausgestaltet und dimensioniert sind, daß sie gleichzeitig bei Beschädigung/Zerstörung der Zwischenschicht aus Gummi als Verliersicherung wirken.

Die Anschlagpuffer, die durch die stirnseitigen Begrenzungen des Gehäuses gebildet sind, weisen dazu vorteilhafterweise einen Innendurchmesser auf, der größer ist als der Außendurchmesser des Kugelkörpers und kleiner, als der größte Außendurchmesser des Führungsrings.

Das Gehäuse weist im Bereich seiner stirnseitigen Begrenzungen Haltevorrichtungen auf, in denen der Faltenbalg aufgenommen ist. Hinsichtlich geringer Fertigungskosten und einer einfachen Montage ist es vorteilhaft, wenn die Haltevorrichtung und die Anschlagpuffer einstückig ineinander übergehend ausgebildet sind und Bestandteile des Gehäuses bilden. Die 3-fach Funktion des Gehäuses bei einfacher Herstellbarkeit ist von hervorzuhebender Bedeutung. Die in radialer Richtung nach innen weisenden Schenkel der Gehäuseteile können dazu durch axiales Umrollen des Materials um mehr als 90° verrundet werden. Diese Verrundung erstreckt sich über den gesamten Umfangsbereich, so daß einerseits eine Abstützung des Gehäuses bei axialer Bewegung über die Zwischenschicht am Gelenk erfolgt und eine Anschlagfunktion entsteht, bei gleichzeitiger Verliersicherung und daß andererseits der umgerollte Rand der axialen Anschläge zur Aufnahme des Faltenbalgs dient, der das Kugelgelenk vor Verschmutzung und Verschleiß schützt.

Gemäß einer vorteilhaften Ausgestaltung ist es vorgesehen, daß die einander zugewandten Oberflächenbereiche des Führungsrings und/oder des Kugelkörpers mit einer reibungsvermindernden Oberflächenbeschichtung versehen sind oder daß der Führungsring aus glasfaserverstärktem PTFE besteht. Eine gute und kräftearme Relativbebeglichkeit zwischen dem Führungsring und dem von dem Führungsring teilweise umschlossenen Kugelkörper wird dadurch bewirkt unter Vermeidung von gebrauchsdauerverringerndem Verschleiß. Hinsichtlich einer besonders einfachen, kostengünstigen Herstellbarkeit, kann der Führungsring aus glasfaserverstärktem Polytetrafluoräthylen bestehen. Neben guten Gebrauchseigenschaften zeichnet sich ein derartiges Schwenklager durch eine vergleichsweise geringe Masse aus. Der Führungsring und die Zwischenschicht können adhäsiv miteinander verbunden sein.

Die Zwischenschicht aus Gummi kann einen im wesentlichen rechteckigen Querschnitt mit einer radialen und einer axialen Ausdehnung aufweisen, wobei das Verhältnis von radialer zu axialer Ausdehnung 1:1 bis 1:4 beträgt. Ein derartiges Verhältnis hat sich hinsichtlich guter Gebrauchseigenschaften als vorteilhaft bewährt. Einerseits ist durch eine derart ausgebildete Zwischenschicht aus Gummi eine gute Isolation betriebsbedingt eingeleiteter Schwingungen gewährleistet bei ausreichender Nachgiebigkeit des Gehäuses bezogen auf den Kugelkörper in radialer und in axialer Richtung und andererseits eine genaue Positionierung der relativ zueinander beweglichen Teile des Schwenklagers.

Gemäß einer vorteilhaften Ausgestaltung ist es vorgesehen, daß die Zwischenschicht aus Gummi in einem Gehäuse mit topfförmigem Querschnitt angeordnet ist. Das Gehäuse kann in axialer Richtung geteilt und zweiteilig ausgebildet sein, wobei die Zwischenschicht zumindest im Bereich der radialen Begrenzung des Gehäuseteils adhäsiv festgelegt ist. Das Gehäuse kann beispielsweise durch zwei im wesentlichen L-förmige Gehäuseteile gebildet sein, wobei eines der L-förmigen Gehäuseteile das andere Gehäuseteil umfangsseitig kraft-/ oder formschlüssig umschließt. Im Hinblick auf eine einfache Herstellbarkeit und eine einfache Montage kann die Zwischenschicht an dem dem Kugelkörper benachbarten Gehäuseteil anvulkanisiert sein. Die Bindung der Zwischenschicht an das Gehäuseteil kann abhängig von den jeweiligen Gegebenheiten des Anwendungsfalls entlang der gesamten Innenseite erfolgen oder nur im Bereich der radialen, zylindrischen Begrenzung des relativ inneren Gehäuseteils. Erfolgt eine Bindung der Zwischenschicht an dem Gehäuseteil nur an der radialen, zylindrischen Begrenzung und nicht im Bereich der sich in radialer Richtung erstreckenden Bereiche des Gehäuses, kann bei entsprechender Fertigung der Vulkanisationsschwund der Zwischenschicht im Bereich der stirnseitigen Begrenzung des Gehäuses für einen Spalt sorgen, der eine Art Losefunktion ergibt. Die Isolierung hochfrequenter Schwingungen ist dadurch besonders wirkungsvoll.

Das erfindungsgemäße Schwenklager wird nachfolgend anhand der als Anlage beigefügten Zeichnungen weiter erläutert. In den Zeichnungen sind Ausführungsbeispiele des Schwenklagers dargestellt. Es zeigen:

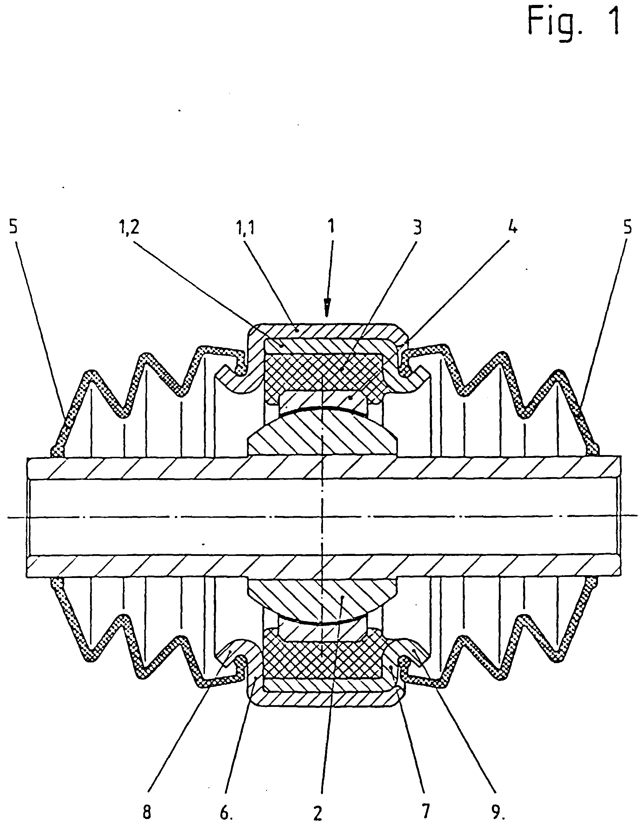

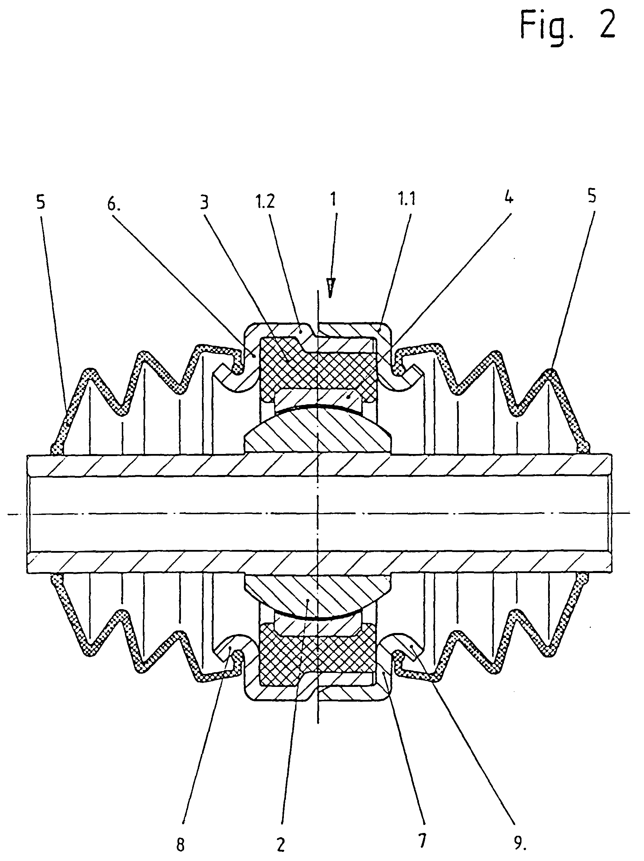

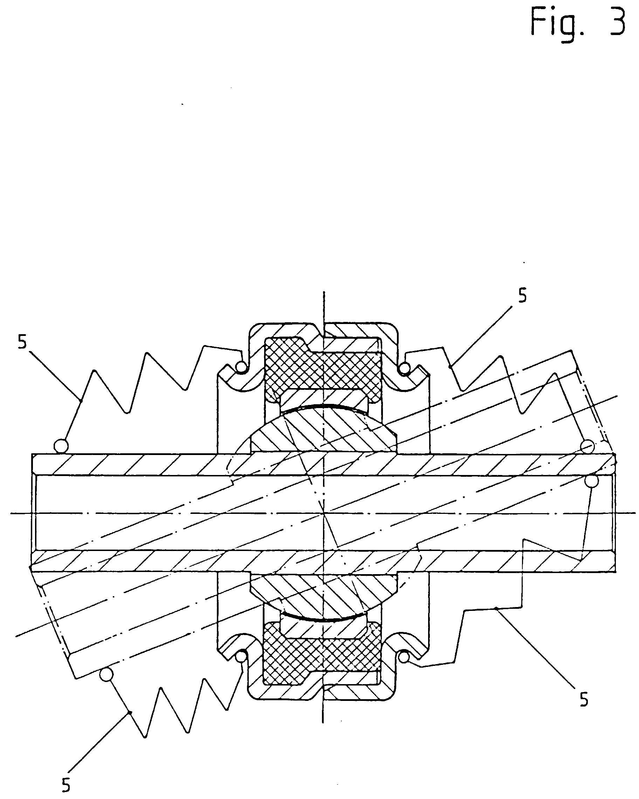

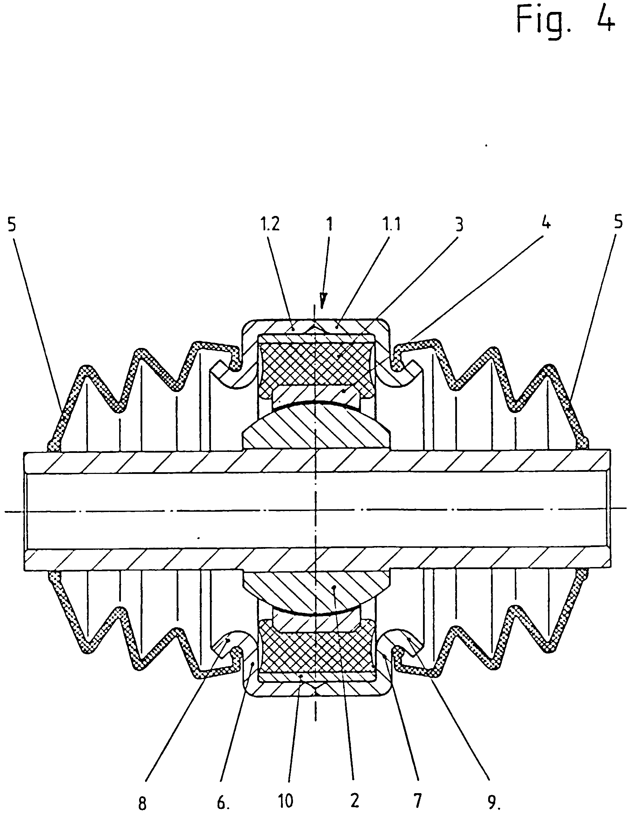

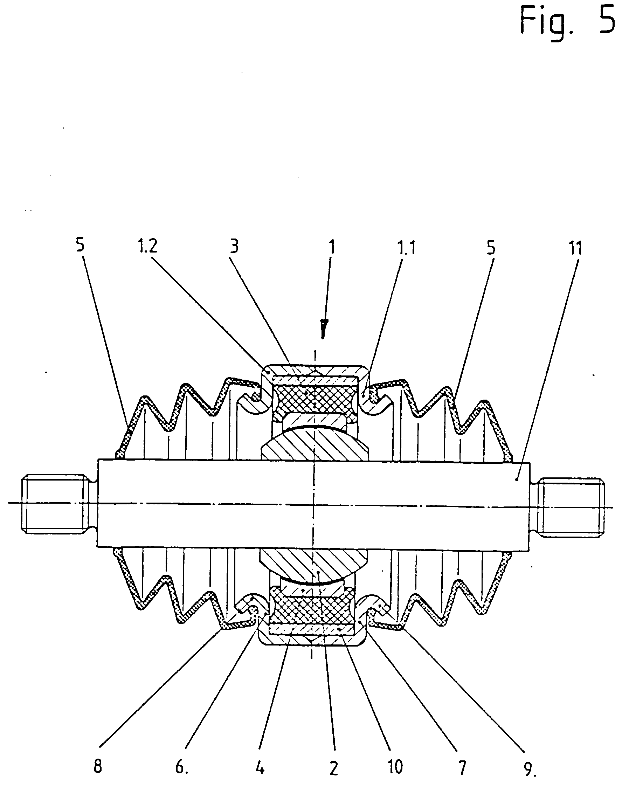

Die Figuren 1 und 2 jeweils ein Ausführungsbeispiel eines erfindungsgemäßen Schwenklagers, wobei die Bindung der Zwischenschicht aus Gummi im Gehäuse unterschiedlich ausgeführt ist, Figur 3 das Schwenklager gemäß Figur 2 bei maximaler kardanischer Auslenkung, Figur 4 ein Schwenklager, ähnlich den Ausführungsbeispielen aus den Figuren 1 und 2, wobei das Gehäuse anders gestaltet ist und Figur 5 ein Schwenklager ähnlich dem Schwenklager aus Figur 4, wobei die innere Befestigung als Gewindebolzen ausgeführt ist.

In den Figuren 1 bis 5 sind Ausführungsbeispiele von Schwenklagern gezeigt, die im wesentlichen aus einem Gehäuse 1, einem Kugelkörper 2, einer Zwischenschicht 3 aus Gummi und einem Führungsring 4 aus einem Hartwerkstoff bestehen. Das Gehäuse 1 ist in den Ausführungsbeispielen zweiteilig ausgebildet, wobei die beiden Gehäuseteile 1.1, 1.2 einen im wesentlichen topfförmigen Querschnitt haben. Der Kugelkörper 2 ist in einem Führungsring 4 mit hohlkugelförmiger Innenfläche geführt, und besteht bevorzugt aus einer Bronzelegierung mit guten Gleiteigenschaften oder aus einem Kunststoff, bevorzugt aus glasfaserverstärktem PTFE. Die Zwischenschicht 3 aus Gummi ist ringförmig ausgebildet und umschließt den Führungsring 4 unter radialer Vorspannung. Die Zwischenschicht ist zumindest im zylindrischen Teilbereich des Gehäuses 1 anvulkanisiert und wird, um gebrauchsdauerverringernde Zugspannungen zu vermeiden, bei der Montage des Schwenklagers kalibriert. Das Gehäuse 1 weist in axialer Richtung beiderseits Haltevorrichtungen 8, 9 auf, in denen jeweils ein axiales Ende eines zur Anwendung gelangenden Faltenbalgs 5 aufgenommen ist. Das andere axiale Ende des Faltenbalgs 5 umschließt den Umfang eines zur Anwendung gelangenden Befestigungselementes unter radialer Vorspannung. Die Faltenbalge 5 schützen das Kugelgelenk vor Verschmutzung und Verschleiß und gewährleisten dadurch auch unter ungünstigen Einsatzbedingungen eine reibungsarme Relativbeweglichkeit und somit gute Gebrauchseigenschaften während einer langen Gebrauchsdauer.

Das in Figur 1 gezeigte Ausführungsbeispiel weist ein Gehäuse 1 mit topfförmigem Querschnitt auf, das aus zwei Gehäuseteilen 1.1, 1.2 besteht. Die Zwischenschicht 3 aus Gummi ist in Gehäuseteil 1.2 im Bereich des radial nach innen weisenden Schenkels des Anschlagpuffers 6 und im Bereich der radialen, zylindrischen Begrenzung anvulkanisiert. Das Gehäuseteil 1.1 ist auf das Gehäuseteil 1.2 in axialer Richtung aufgepreßt und auf der von dem Anschlagpuffer 7 abgewandten Seite eingebördelt. Das Gehäuse 1 wird bei der Herstellung kalibriert, so daß Zugspannungen innerhalb der Zwischenschicht 3 zuverlässig ausgeschlossen werden können. Die Zwischenschicht 3 sowie der Führungsring 4 können im Hinblick auf eine einfache Montage des Schwenklagers adhäsiv verbunden sein.

In Figur 2 ist ein Schwenklager gezeigt, bei dem die Zwischenschicht 3 zunächst als Rohr vulkanisiert und anschließend zwischen den Führungsring 4 und das Gehäuse 1 eingepreßt wird. Im Hinblick auf eine einfache Fertigung ist es vorgesehen, daß das Gehäuseteil 1.2 in axialer Richtung hinterschnitten ist. Diese Ausgestaltung bedingt im Vergleich zu dem Ausführungsbeispiel von Figur 1 einen relativ verringerten Gehäusedurchmesser. Nach dem Einpressen der Zwischenschicht 3 zwischen das Gehäuseteil 1.2 und den Führungsring 4 kann das Gehäuseteil 1.1 in axialer Richtung aufgepreßt werden und bildet so den zweiten Axialanschlag in Form des Anschlagpuffers 7.

In Figur 3 ist das Schwenklager aus Figur 2 gezeigt, wobei die maximalen kardanische Auslenkung des Lagers in gestrichelten Linien eingezeichnet ist. Der Faltenbalg 5 vermag den Auslenkbewegungen des Schwenklagers ohne Relativbewegung im Bereich seiner Anschlüsse zu folgen.

In Figur 4 ist ein Schwenklager gezeigt, das nur entlang der radialen Begrenzung des Gehäuses 1 anvulkanisiert ist. Im Bereich der Anschlagpuffer 6, 7 ist die Zwischenschicht 3 nicht an das Gehäuse gebunden. Durch Vulkanisationsschwund kann die Zwischenschicht 3, wie in diesem Beispiel gezeigt, mit den Anschlagpuffern 6, 7 einen Spalt begrenzen, wodurch sich eine bessere Isolierung höherfrequenter Schwingungen ergibt. In diesem Beispiel sind die beiden Gehäuseteile 1.1, 1.2 symmetrisch zueinander ausgeführt, wodurch sich eine weiter vereinfachte Fertigung ergibt. Die Zwischenschicht 3 aus Gummi ist umfangsseitig unter radialer Vorspannung von einem Haltering 10 umschlossen, der sich reibschlüssig auf der von der Zwischenschicht 3 abgewandten Seite im Gehäuse 1 abstützt.

Das Schwenklager aus Figur 5 unterscheidet sich von dem Schwenklager aus Figur 4 nur durch seine mittige Befestigung. Der Kugelkörper 2 umschließt in diesem Beispiel einen Zapfen 11 umfangsseitig und ist diesem in starrer Weise zugeordnet. Der Zapfen 11 weist in axialer Richtung beiderseits im Bereich seiner Begrenzungen ein Gewinde auf, an dem beispielsweise Radführungselemente von Kraftfahrzeugen befestigt werden können.

## Patentansprüche

1. Schwenklager, umfassend einen in einem Gehäuse (1) aufgenommenen Kugelkörper (2), wobei der Kugelkörper (2) durch eine ringförmig ausgebildete Zwischenschicht (3) aus Gummi in dem Gehäuse (1) abgestützt ist, wobei der Kugelkörper (2) durch einen Führungsring (4) auf der Zwischenschicht (3) abgestützt ist, wobei das Schwenklager durch zumindest einen am Gehäuse (1) befestigten Faltenbalg (5) abgedichtet ist und wobei das Gehäuse (1) beiderseits im Bereich seiner stirnseitigen Begrenzungen radial nach innen gerichtete Anschlagpuffer (6, 7) zur Begrenzung von extremen Relativverlagerungen in axialer Richtung aufweist, dadurch gekennzeichnet, daß der Führungsring (4) aus einem Hartwerkstoff besteht, daß die Anschlagpuffer (6, 7) durch Umformen der stirnseitigen Begrenzungen gebildet sind und daß die Anschlagpuffer (6, 7) einen Innendurchmesser aufweisen, der größer ist als der Außendurchmesser des Kugelkörpers (2) und kleiner ist, als der größte Außendurchmesser des Führungsrings (4), daß das Gehäuse (1) im Bereich seiner stirnseitigen Begrenzungen Haltevorrichtungen (8, 9) aufweist, in denen der Faltenbalg (5) aufgenommen ist und daß die Haltevorrichtungen (8, 9) und die Anschlagpuffer (6, 7) einstückig ineinander übergehend ausgebildet sind.

2. Schwenklager nach Anspruch 1, dadurch gekennzeichnet, daß die einander zugewandten Oberflächenbereiche des Führungsrings (4) und/oder des Kugelkörpers (2) mit einer reibungsvermindernden Oberflächenbeschichtung versehen sind.

3. Schwenklager nach Anspruch 1, dadurch gekennzeichnet, daß der Führungsring (4) aus glasfaserverstärktem PTFE besteht.

4. Schwenklager nach Anspruch 1, dadurch gekennzeichnet, daß die Zwischenschicht (3) aus Gummi einen im wesentlichen rechteckigen Querschnitt mit einer radialen und einer axialen Ausdehnung aufweist und daß das Verhältnis von radialer zu axialer Ausdehnung 1:1 bis 1:4 beträgt.

5. Schwenklager nach einem der Ansprüche 1 bis 4, dadurch gekennzeichnet, daß die Zwischenschicht (3) in einem Gehäuse (1) mit topfförmigem Querschnitt angeordnet ist.

6. Schwenklager nach Anspruch 5, dadurch gekennzeichnet, daß das Gehäuse (1) in axialer Richtung geteilt und zweiteilig ausgebildet ist und daß die Zwischenschicht (3) zumindest im Bereich der radialen Begrenzungen eines Gehäuseteils (1.1, 1.2) adhäsiv festgelegt ist.

7. Schwenklager nach Anspruch 6, dadurch gekennzeichnet, daß die Gehäuseteile (1.1, 1.2) durch eine kraft- und/oder formschlüssige Verbindung aneinander gehalten sind.

## Claims

1. A pivoting bearing, comprising a spherical body (2) which is held in a housing (1), the spherical body (2) being supported in the housing (1) by an intermediate layer (3) of annular design and made of rubber, the spherical body (2) being supported on the intermediate layer (3) by a guide ring (4), the pivoting bearing being sealed off by at least one bellows (5) attached to the housing (1), and the housing (1) having on both sides in the region of its end-face boundaries radially inwardly directed stop buffers (6, 7) for limiting extreme relative displacements in the axial direction, characterized in that the guide ring (4) consists of a hard material, in that the stop buffers (6, 7) are formed by shaping the end-face boundaries, and in that the stop buffers (6, 7) have an inside diameter which is larger than the outside diameter of the spherical body (2) and is smaller than the largest outside diameter of the guide ring (4), in that the housing (1) has, in the region of its end-face boundaries, holding devices (8, 9) in which the bellows (5) are held, and in that the holding devices (8, 9) and the stop buffers (6, 7) are designed to merge integrally into one another.

2. A pivoting bearing according to claim 1, characterized in that the mutually facing surface regions of the guide ring (4) and/or of the spherical body (2) are provided with a friction-reducing surface coating.

3. A pivoting bearing according to claim 1, characterized in that the guide ring (4) consists of glass fibre-reinforced PTFE.

4. A pivoting bearing according to claim 1, characterized in that the intermediate layer (3) made of rubber has a substantially rectangular cross-section with a radial and an axial extent, and in that the ratio of the radial to the axial extent is from 1:1 to 1:4.

5. A pivoting bearing according to any one of claims 1 to 4, characterized in that the intermediate layer (3) is arranged in a housing (1) of pot-shaped cross-section.

6. A pivoting bearing according to claim 5, characterized in that the housing (1) is divided in the axial direction and is of two-part design, and in that the intermediate layer (3) is adhesively fixed at least in the region of the radial boundaries of one housing part (1.1, 1.2).

7. A pivoting bearing according to claim 6, characterized in that the housing parts (1.1, 1.2) are held against one another by means of a non-positive and/or positive-locking connection.

## Revendications

1. Palier pivotant comportant un corps sphérique (2) logé dans un boîtier (1), le corps sphérique (2) étant soutenu dans le boîtier (1) par une couche intermédiaire (3) en caoutchouc réalisée en forme de bague, le corps sphérique (2) étant soutenu sur la couche intermédiaire (3) par une bague de guidage (4), le palier pivotant étant rendu étanche par au moins un soufflet (5) fixé au boîtier (1) et le boîtier (1) comportant au niveau de ses limitations frontales, de part et d'autre, des butoirs (6, 7) orientés radialement vers l'intérieur, destinés à limiter des déplacements relatifs extrêmes dans le sens radial, caractérisé en ce que la bague de guidage (4) est composé d'un matériau dur, en ce que les butoirs (6, 7) sont formés par déformation des limitations frontales et en ce que les butoirs (6, 7) ont un diamètre intérieur supérieur au diamètre extérieur du corps sphérique (2) et inférieur au plus grand diamètre extérieur de la bague de guidage (4), en ce que le boîtier (1) comporte au niveau de ses limitations frontales des dispositifs de retenue (8, 9), dans lesquels est logé le soufflet (5) et en ce que les dispositifs de retenue (8, 9) et les butoirs (6, 7) sont exécutés de manière à se fondre les uns dans les autres.

2. Palier pivotant selon la revendication 1, caractérisé en ce que les parties de surface se faisant face de la bague de guidage (4) et/ou du corps sphérique (2) sont munies d'un revêtement de surface diminuant la friction.

3. Palier pivotant selon la revendication 1, caractérisé en ce que la bague de guidage (4) est en PTFE renforcé de fibres de verre.

4. Palier pivotant selon la revendication 1, caractérisé en ce que la couche intermédiaire (3) en caoutchouc a une section essentiellement rectangulaire avec une extension radiale et une extension axiale et en ce que le rapport extension radiale / extension axiale est compris entre 1:1 et 1: 4.

5. Palier pivotant selon l'une des revendications 1 à 4, caractérisé en ce que la couche intermédiaire (3) est disposée dans un boîtier (1) ayant une section en forme de pot.

6. Palier pivotant selon la revendication 5, caractérisé en ce que le boîtier (1) est divisé dans le sens axial et réalisé en deux pièces et en ce que la couche intermédiaire (3) est fixée par collage au moins au niveau des limitations radiales d'une partie de boîtier (1.1, 1.2).

7. Palier pivotant selon la revendication 6, caractérisé en ce que les parties de boîtier (1.1, 1.2) sont maintenues l'une contre l'autre grâce à une connexion par adhérence et/ou par blocage.
